# EUROPÄISCHE PATENTANMELDUNG

(11) **EP 1 024 675 A2**
(43) Veröffentlichungstag der Anmeldung: **02.08.2000**
(21) Anmeldenummer: 00101509.8
(22) Anmeldetag: 26.01.2000
(51) Int. Cl.: H04Q 7/38

(54) **Verfahren zum Empfangen von Rundsendenachrichten mehrerer zentraler Kommunikationseinheiten**

(30) Priorität: 26.01.1999 DE 19903018
(71) Anmelder: SIEMENS AKTIENGESELLSCHAFT, 80333 München (DE)
(72) Erfinder: Sibila, Arnd, 82272 Moorenweis (DE); Hofmann, Jürgen, 86415 Mering (DE)

(57) **Zusammenfassung**

Von zentralen Kommunikationseinheiten (RBS1...6) werden jeweils Rundsendenachrichten (rn1...6) mit eingefügten Rundsendekanal-Informationen (bbpo1...6) an dezentrale Kommunikationseinheiten (DKE1...6) ausgesendet. Durch diese werden zumindest von zwei zentralen Kommunikationseinheiten (RBS1...6) empfangene Rundsendekanal-Informationen (bbpo1...6) erfaßt, bewertet und gespeichert, sowie in Abhängigkeit vom Bewertungsergebnis die jeweils ausgesendeten Rundsendenachrichten (rn1...6) empfangen. Mit Hilfe der gespeicherten Rundsendekanal-Informationen (bbpo1...6) können die Funkressourcen eines Mehrzellensystems effektiver genutzt werden.

## Beschreibung

Bei drahtlosen, auf Funkkanälen basierenden Kommunikationsnetzen, insbesondere bei Punkt-zu-Multipunkt Funk-Zubringernetzen - auch als "radio in the lokal loop" bzw. "RLL" oder "wireless local loop" bzw. "WLL" bezeichnet - sind mehrere als Netzabschlußeinheiten ausgestaltete dezentrale Kommunikationseinheiten jeweils über einen oder mehrere Funkkanäle an eine Basisstation - auch als "radio base station" bzw. "RBS" bezeichnet - angeschlossen. Im telcom report Nr. 18 (1995), Heft 1, "Drahtlos zum Freizeichen", Seite 36, 37 ist beispielsweise ein drahtloses Zubringernetz - auch als Teilnehmerzugangsnetz oder Access-Network bezeichnet - für die drahtlose Sprach- und Datenkommunikation beschrieben. Das beschriebene Kommunikationssystem stellt einen RLL-Teilnehmeranschluß in Kombination mit moderner Breitband-Infrastruktur dar - z.B. "Fiber to the Curb" -, welches in kurzer Zeit und ohne großen Aufwand anstelle der Verlegung von drahtgebundenen Anschlußleitungen realisierbar ist. Die den einzelnen Teilnehmern zugeordneten Netzabschlußeinheiten RNT - Radio Network Termination - sind über das Übertragungsmedium "Funkkanal" und über Basisstationen RBS an ein übergeordnetes Kommunikationsnetz, beispielsweise an das ISDN-orientierte Festnetz, angeschlossen. Die drahtlosen Funkkanäle können beispielsweise mit Hilfe schmalbandiger drahtloser Übertragungsverfahren bzw. Funkstandards - z.B. DECT oder CDMA - realisiert sein, wobei insbesondere gemäß dem DECT-Standard ausgestaltete Zubringernetze für hohe Verkehrsaufkommen in zukünftigen Ballungszentren geeignet sind.

Im internationalen DECT-Standard - ETSI-Empfehlung ETS 300 175 Teil 1 bis 9 - sind die physikalischen und prozeduralen Eigenschaften definiert. Die Übertragung von Informationen erfolgt jeweils über eine gemäß dem DECT-Standard ausgestaltete DECT-Luftschnittstelle, über welche durch eine Kombination von FDMA-, TDMA- und TDD-Zugriffsverfahren (Frequency Division Multiple Access / Time Division Multiple Access / Time Division Duplex) auf das drahtlose Übertragungsmedium "DECT-Funkkanal" zugegriffen wird. Hierbei stehen im Frequenzbereich zwischen 1880 MHz und 1900 MHz 10 Trägerfrequenzen mit einem Kanalabstand von jeweils 1,728 MHz zur Verfügung (FDMA), wobei der pro Träger festgelegte Zeitrahmen in 24 Zeitschlitze bzw. Kanäle - auch als "Slots" bezeichnet - eingeteilt ist (TDMA) . Ein in 24 Zeitschlitze unterteilter Zeitrahmen - auch als "Frame" bezeichnet - wiederholt sich periodisch alle 10 ms. Innerhalb eines Zeitrahmens werden die für eine bidirektionale Informationsübermittlung erforderlichen Hin- und Rückkanäle durch das "Time Division Duplex"-Verfahren (TDD) realisiert. Durch den Duplexbetrieb werden die ersten 12 Zeitschlitze eines Rahmens zum Senden von Informationen bzw. Nutzdaten von der Basisstation an die dezentralen Netzabschlußeinheiten und die restlichen 12 Zeitschlitze zum Senden von Nutzdaten von den drahtlosen Netzabschlußeinheiten zu einer Basisstation verwendet. Auf einer Trägerfrequenz sind beispielsweise 12 Duplexkanäle realisierbar. Insgesamt werden bei einem nach dem DECT-Standard ausgestalteten Funk-Kommunikationsnetz jeweils 12 Duplexkanäle auf jeder der 10 Trägerfrequenzen und somit 120 Duplexkanäle bereitgestellt. Durch eine Integration einer dezentralen Netzabschlußeinheit in ein Kommunikationsendgerät kann dieses als mobiles Kommunikationsendgerät ausgestaltet und ebenfalls an einer Basisstation drahtlos angeschlossen werden. Im folgenden werden die dezentralen Netzabschlußeinheiten auch als dezentrale Kommunikationseinheiten bezeichnet.

Bei überwiegend im privaten Bereich eingesetzten Einzellensystemen können mehrere dezentrale Kommunikationseinheiten, bzw. mobile Kommunikationsendgeräte an einer Basisstation betrieben werden. Weiterhin sind Mehrzellensysteme bekannt, bei welchen mehrere Basisstationen über eine Basisstation-Kontrolleinheit an das übergeordnete Kommunikationsnetz angeschlossen sind. Insbesondere für öffentliche Mehrzellensysteme kann ein zusätzliches Authentifikationsmodul zur Identifizierung der an die Basisstation angeschlossenen Teilnehmer vorgesehen werden. Bei einem Mehrzellensystem werden durch jede mit Hilfe einer Basisstation realisierte Zelle die selben Leistungsmerkmale wie bei einem Einzellensystem unterstützt, wobei durch den Zusammenschluß mehrerer Zellen der Aktionsradius vergrößert wird. Mit Hilfe von öffentlichen Mehrzellensystemen können beispielsweise drahtlose Teilnehmerzugangsnetze realisiert werden.

Gemäß dem DECT-Basisstandard weist jeder Zeitschlitz bzw. "Slot" ein Zeitfenster mit einer zeitlichen Ausdehnung von 416 µs auf, wobei in jedem Zeitschlitz jeweils 424 Bit Datenumfang aufweisende Informationen übermittelt werden. Jedes innerhalb eines DECT-Zeitschlitzes übermittelte Datenpaket weist neben einem Nutzdatenfeld - auch als "B-Feld" bezeichnet - unter anderem ein 64 Bit Datenumfang aufweisendes Signalisierungsdatenfeld - auch als "A-Feld" bezeichnet - zur Übermittlung von Signalisierungs- und Kontrolldaten von der Basisstation an die im Funkbereich der Basisstation angeordneten dezentralen Kommunikationseinheiten auf. Die von jeder Basisstation über eine als Rundsendekanal bezeichnete Frequenz-/Zeitschlitz-Kombination an alle dezentralen Kommunikationseinheiten ausgesendeten Signalisierungs- und Kontrolldaten werden auch als Rundsendenachrichten bezeichnet, in welche unterschiedliche Arten von Rundsendeinformationen - auch als "Broadcast-Information" bezeichnet - einfügbar sind. Mit Hilfe des Signalisierungsdatenfeldes bzw. A-Feldes wird eine Übertragungskapazität von 4,8 kbit/s für die Übermittlung von basisstation-spezifischen Rundsendenachrichten parallel zur Übermittlung von Nutzinformationen bereitgestellt, wobei die durch das A-Feld bereitgestellte Signalisierungskapazität einem der im DECT-Basisstandard ETS 300 175 - 3 (MAC-Layer), Kapitel 6.2.2.1.1 definierten, logischen Kanäle zugeordnet werden kann. Es sind folgende logische Kanäle bekannt, über welche die unterschiedlichen Arten von Rundsendeinformationen übermittelt werden:
- C-Kanal: zur Übermittlung von Signalisierungs-Informationen höherer Schichten - auch als C_{T}-Rundsendeinformationen bezeichnet -,
- M-Kanal: zur Übermittlung von MAC-Kontrollbefehlen, z.B. Link-Access Request, Handover Request usw. - auch als M_{T}-Rundsendeinformationen bezeichnet -,
- N-Kanal: zur Übermittlung von DECT-Identitäten und Access-Right-Identifiers, durch welche ein Handshake zwischen dezentralen und der zentralen Kommunikationseinrichtungen realisiert wird - auch als N_{T}-Rundsendeinformationen bezeichnet -,
- P-Kanal: zur Übermittlung von Paginginformationen - auch als P_{T}-Rundsendeinformationen bezeichnet -, und
- Q-Kanal: zur Übermittlung von systemimmanenten Informationen für den MAC-Layer - beispielsweise Übermittlung des Multiframemarkers - auch als Q_{T}-Rundsendeinformationen bezeichnet.

Den unterschiedlichen Arten von Rundsendeinformationen C_{T}, M_{T}, N_{T}, P_{T}, Q_{T} sind jeweils unterschiedliche Prioritäten zugeordnet, wobei die M_{T}-Rundsendeinformationen die höchste Priorität aufweisen. Weiterhin ist den C_{T}-Rundsendeinformationen eine höhere Priorität als den N_{T}- und P_{T}-Rundsendeinformationen zugeordnet, wobei die P_{T}-Rundsendeinformationen eine höhere Priorität als die N_{T}-Rundsendeinformationen aufweisen.

Wie bereits erläutert werden 24 Zeitschlitze zu einem eine Zeitdauer von 10 ms aufweisenden DECT-TDMA-Rahmen bzw. DECT-Rahmen zusammengefaßt. Desweiteren werden 16 dieser DECT-Rahmen zu einem logischen DECT-Multirahmen zusammengefaßt.

Über diesen DECT-Multirahmen werden die unterschiedlichen Rundsendeinformationen C_{T}, M_{T}, N_{T}, P_{T}, Q_{T} mit Hilfe eines in Kapitel 6.2.2.1.1 in ETS 300 175-3 beschriebenen Multiplexverfahrens - "T-MUX algorithm tor RFP-Transmissions" - gemultiplext.

In aktuellen gemäß dem DECT-Standard ausgestalteten drahtlosen Kommunikationsnetzen muß durch jede Basisstation ständig ein Übertragungskanal bzw. Rundsendekanal zur Aussendung der Rundsendenachrichten belegt sein, um unter anderem den im Funkbereich von einer oder mehreren Basisstationen angeordneten dezentralen Kommunikationseinheiten mit Hilfe der Rundsendenachrichten ein Aufsynchronisieren bzw. Anmelden an derjenigen Basisstation mit dem stärksten empfangenen Signalpegel zu ermöglichen. Für den Fall, daß aktuell keine Verbindung zwischen der Basisstation und einer im Funkbereich angeordneten dezentralen Kommunikationseinheit aktiv ist, werden die erforderlichen Rundsendenachrichten von der Basisstation über einen sogenannten "Dummy-Bearer" ausgesendet. Bei einer Übermittlung der Rundsendenachrichten über einen "Dummy-Bearer" werden keine Nutzinformationen innerhalb des Zeitschlitzes übermittelt, jedoch können durch alle im Funkbereich der Basisstation angeordneten dezentralen Kommunikationseinheiten die im A-Feld übermittelten Rundsendenachrichten empfangen und ausgewertet werden, um beispielsweise ein Aufsynchronisieren an der entsprechenden Basisstation zu ermöglichen. Im Falle einer aktiven Verbindung zwischen einer dezentralen Kommunikationseinheit und der Basisstation, werden neben den im B-Feld angeordneten Nutzdaten der aktiven Verbindung die im A-Feld angeordneten Rundsendenachrichten an alle im Funkbereich der Basisstation angeordneten dezentralen Kommunikationseinheiten gesendet. Gemäß dem DECT-Standard kann eine Basisstation zusätzlich zu einer aktiven Verbindung einen weiteren "Dummy-Bearer" zur Übermittlung der Rundsendenachrichten einrichten, wobei beide Rundsendekanäle - d.h. aktive Verbindung (auch als "traffic" bezeichnet) oder "Dummy-Bearer" - alternierend genutzt werden. Durch die alternierende Nutzung der zur Verfügung stehenden Rundsendekanäle wird der Empfang der Rundsendenachrichten an den im Funkbereich der Basisstation angeordneten, dezentralen Kommunikationseinheiten verbessert. Jede gemäß dem DECT-Standard ausgestaltete, zentrale Kommunikationseinheit bzw. Basisstation ist somit immer auf wenigstens einer DECT-Frequenz-/Zeitschlitz-Kombination aktiv, wobei über das A-Feld die Rundsendenachrichten an alle dezentralen Kommunikationseinheiten innerhalb des Funkbereichs ausgesendet werden.

Eine dezentrale Kommunikationseinheit ist immer an derjenigen Basisstation mit der am höchsten gemessenen Empfangsfeldstärke angemeldet bzw. "eingelockt" und weist eine DECT-Rahmen- und DECT-Multirahmen-Synchronität - bei einer Realisierung einer Verschlüsselung der zu übermittelnden Informationen - zu dieser auf, d.h. durch die dezentrale Kommunikationseinheit werden nur die Rundsendenachrichten derjenigen Basisstation empfangen und bewertet, an welcher die dezentrale Kommunikationseinheit eingelockt ist. Bei der Bewertung der Rundsendenachrichten werden die empfangenen Rundsendenachrichten beispielsweise nach für die jeweilige Kommunikationseinheit bestimmten Paginginformationen durchsucht, durch welche unter anderem das Rufen der dezentralen Kommunikationseinheiten gesteuert bzw. initialisiert wird.

In aktuellen gemäß dem DECT-Standard ausgestalteten drahtlosen Zubringernetzen sind einer an einer Basisstation angemeldeten, dezentralen Kommunikationseinheit nur die Identitäten der in der unmittelbaren Umgebung der dezentralen Kommunikationseinheit angeordneten Basisstationen mit den höchsten Empfangsfeldstärken bekannt. Für den Fall eines von einer dezentralen Kommunikationseinheit angeforderten Verbindungsaufbaus zu einer Basisstation, deren Übertragungsressourcen aktuell belegt sind, oder für den Fall, daß eine bereits aktive Verbindung aufgrund einer schlechten Übertragungsqualität des Übertragungskanals an eine andere Basisstation übergeben werden muß - auch als Intercell Handover bezeichnet - ist bedingt durch die fehlende Auswertung der von den anderen Basisstationen ausgesendeten Rundsendenachrichten die Wahrscheinlichkeit eines erfolgreichen Verbindungsaufbaus begrenzt.

Der Erfindung liegt die Aufgabe zugrunde, insbesondere bei mit Hilfe von Mehrzellensystemen realisierten RLL- bzw. WLL-Systemen die zur Verfügung stehenden, funktechnischen Übertragungsressourcen effektiver zu nutzen. Die Aufgabe wird durch die Merkmale des Patentanspruchs 1 gelöst.

Beim erfindungsgemäßen Verfahren werden die Rundsendenachrichten von mehreren zentralen Kommunikationseinheiten jeweils über zumindest einen zuordenbaren, kommunikationseinrichtungs-spezifischen Rundsendekanal an zumindest eine dezentrale Kommunikationseinheit ausgesendet, wobei in die über die Rundsendekanäle gesendeten Rundsendenachrichten jeweils eine die aktuelle Frequenz und/oder den aktuellen Zeitschlitz und/oder den aktuellen Spereizcode des kommunikationseinheitspezifischen Rundsendekanals angebende Rundsendekanal-Information eingefügt ist. Der wesentliche Aspekt des erfindungsgemäßen Verfahrens besteht darin, daß durch die zumindest eine dezentrale Kommunikationseinheit die aktuellen Rundsendekanal-Informationen von zumindest zwei der zentralen Kommunikationseinheiten erfaßt und bewertet werden und daß in Abhängigkeit vom Bewertungsergebnis die von den zentralen Kommunikationseinheiten ausgesendeten Rundsendenachrichten empfangen, bewertet und optional gespeichert werden.

Der wesentliche Vorteil des erfindungsgemäßen Verfahrens besteht darin, daß durch den Empfang und die Auswertung der von mehreren zentralen Kommunikationseinheiten bzw. Basisstationen eines drahtlosen Kommunikationsnetzes ausgesendeten Rundsendenachrichten der dezentralen Kommunikationseinheit eine bessere Einschätzung der durch die benachbarten Basisstationen bereitgestellten Übertragungskapazität bzw. der Übertragungsressourcen ermöglicht wird. Durch das erfindungsgemäße Empfangen, Auswerten und Abspeichern der von mehreren Basisstationen ausgesendeten Rundsendenachrichten wird bei einer durch die dezentrale Kommunikationseinheit initiierten Verbindungsanforderung ein schnellerer Verbindungsaufbau zu einer Basisstation sowie ein schnellerer und sichererer Intercell-Handover bei einem lokalen Wechsel der dezentralen Kommunikationseinheit vom Funkbereich einer ersten Basisstation in den Funkbereich einer zweiten Basisstation gewährleistet.

Gemäß einer vorteilhaften Ausgestaltung des erfindungsgemäßen Verfahrens sind die zentralen und dezentralen Kommunikationseinheiten gemäß dem internationalen DECT-Standard ETS 300 175 ausgestaltet - Anspruch 4. Hierdurch ist das erfindungsgemäße Verfahren insbesondere für drahtlose DECT-Kommunikationsnetze gemäß zukünftiger, weiter entwickelter DECT-Basisstandards konzipiert. In derartigen drahtlosen DECT-Kommunikationsnetzen weisen die zentralen Kommunikationseinheiten eine DECT-Rahmen- und DECT-Multirahmen-Synchronität auf, wobei von den zentralen Kommunikationseinheiten die Rundsendenachrichten multirahmen-spezifisch mit Hilfe eines Multiplexverfahrens gemäß dem DECT-Basisstandard ausgesendet werden. Bei drahtlosen DECT-Kommunikationsnetzen gemäß dem zukünftigen DECT-Standard werden die multirahmen-spezifischen Rundsendenachrichten in mehreren DECT-Rahmen innerhalb eines DECT-Multirahmens gesendet, wobei innerhalb eines periodisch wiederkehrenden DECT-Multirahmens die aktuellen kommunikationseinheit-spezifischen Rundsendekanal-Informationen gesendet werden - Anspruch 5.

Weitere vorteilhafte Ausgestaltungen des erfindungsgemäßen Verfahrens sind den weiteren Ansprüchen zu entnehmen.

Im Folgenden wird das erfindungsgemäße Verfahren anhand mehrerer Zeichnungen näher erläutert. Dabei zeigen
- FIG 1: in einem Blockschaltbild ein für den Einsatz des erfindungsgemäßen Verfahrens ausgestaltetes, drahtloses Zubringernetz, und
- FIG 2A bis FIG 2D: eine beispielhafte Ausgestaltung des T-Mux Algorithmus zur prioritätsabhängigen Übermittlung von Rundsendeinformationen im Rahmen der DECT-Multirahmen- und DECT-Rahmen-Struktur.

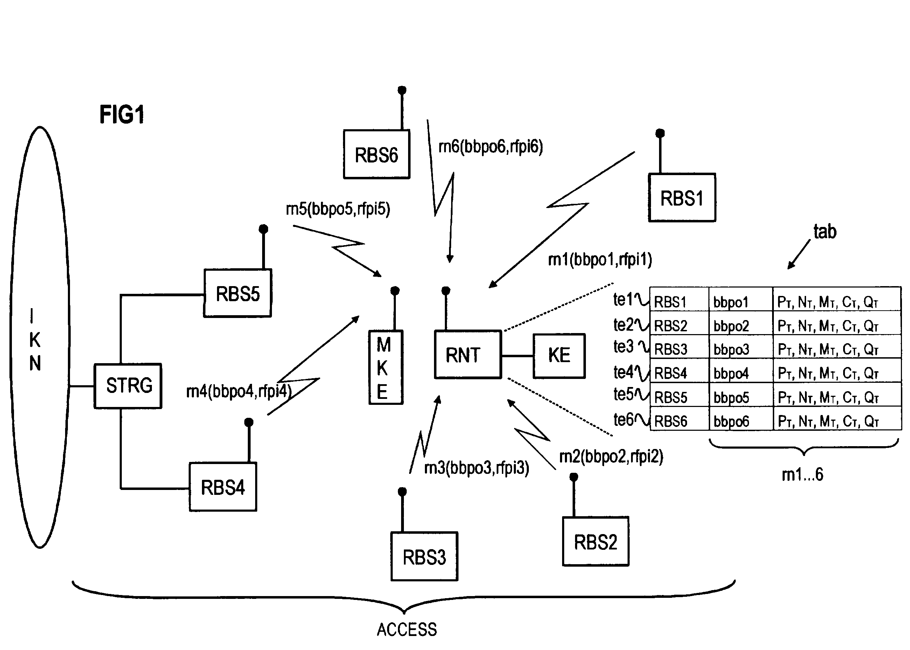

FIG 1 zeigt in einem Blockschaltbild ein drahtloses Teilnehmerzugangsnetz ACCESS, über das eine drahtlose Netzabschlußeinheit RNT und ein mobiles Kommunikationsendgerät MKE mit einem übergeordneten, beispielsweise ISDN-orientierten, Kommunikationsnetz IKN verbindbar sind. Im drahtlosen Teilnehmerzugangsnetz ACCESS sind mehrere Basisstationen RBS1...6 angeordnet, an welche die drahtlose Netzabschlußeinheit RNT bzw. das mobile Kommunikationsendgerät MKE drahtlos anschließbar sind. Üblicherweise sind in einem drahtlosen Teilnehmerzugangsnetz ACCESS mehrere an den Basisstationen RBS drahtlos anschließbare Netzabschlußeinheiten RNT und mobile Kommunikationsendgeräte MKE angeordnet, d.h. im Blockschalt-bild sind in einem Ausführungsbeispiel lediglich die zur Erläuterung des erfindungsgemäßen Verfahrens erforderlichen Einrichtungen eines Teilnehmerzugangsnetzes ACCESS dargestellt, wobei die sechs Basisstationen RBS1...6 die zentralen Kommunikationseinheiten und die drahtlose Netzabschlußeinheit RNT sowie das mobile Kommunikationsendgerät MKE die dezentralen Kommunikationseinheiten repräsentieren. In diesem Ausführungsbeispiel ist das drahtlose Teilnehmerzugangsnetz ACCESS als DECT-Teilnehmerzugangsnetz gemäß dem internationalen ETSI-Standard ETS 300 175 ausgestaltet, d.h. die sechs gemäß dem DECT-Standard ausgestalteten und jeweils das Zentrum einer Funkzelle bzw. eines Funkbereiches darstellenden Basisstationen RBS1...6 und die in den jeweiligen Funkbereichen angeordneten und ebenfalls gemäß dem DECT-Standard ausgestalteten, dezentralen Kommunikationseinheiten RNT, MKE sind über jeweils eine DECT-Luftschnittstelle und das Übertragungsmedium "DECT-Funkkanal" miteinander verbindbar.

An die drahtlose Netzabschlußeinheit RNT ist über eine Verbindungsleitung zumindest eine dezentrale Kommunikationseinheit DKE anschließbar. Eine dezentrale Kommunikationseinheit DKE kann beispielsweise durch ein Multimedia-Kommunikationsendgerät - z.B. Personalcomputer - oder ein ISDN-orientiertes Fernsprechendgerät realisiert sein. Weiterhin sind die sechs Basisstationen RBS1...6 über eine Verbindungsleitung mit einer Teilnehmerzugangsnetz-Kontrolleinrichtung STRG verbunden, welche an das übergeordnete, ISDN-orientierte Kommunikationsnetz IKN angeschlossen ist. In FIG 1 ist der Anschluß der Basisstationen RBS1...6 an das übergeordnete Kommunikationsnetz IKN beispielhaft für die vierte und fünfte Basisstation RBS4, 5 dargestellt.

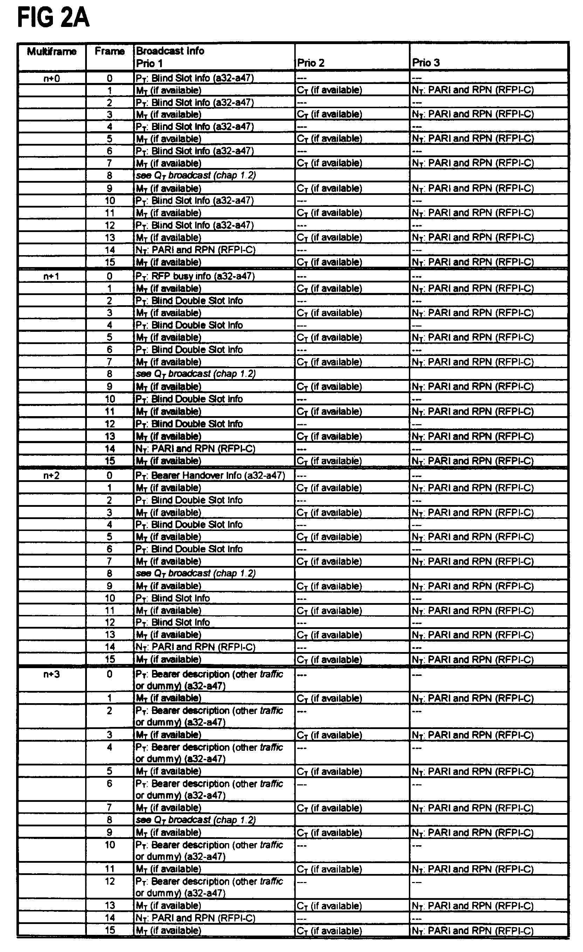

Die sechs im drahtlosen DECT-Teilnehmerzugangsnetz ACCESS angeordneten Basisstationen RBS1...6 weisen eine DECT-Rahmen- und DECT-Multirahmen-Synchronität gemäß dem DECT-Basisstandard ETS 300 175 auf. Dabei werden durch die einzelnen Basisstationen RBS1...6 über jeweils einen Basisstation-spezifischen Rundsendekanal - auch als "Broadcast Bearer" bezeichnet - entsprechende Basisstation-spezifische Rundsendenachrichten rn1...6 - auch als "Broadcast-Information" bezeichnet - ausgesendet. Mit Hilfe der von den sechs Basisstationen RBS1...6 ausgesendeten Rundsendenachrichten rn1...6 werden die für vermittlungstechnische und prozedurale Vorgänge - z.B. Synchronisierung sowie Anmeldung und Verbindungsaufbau zu einer Basisstation bzw. zu einer dezentralen Kommunikationseinheit - erforderlichen Systeminformationen bzw. Rundsendeinformationen an die dezentralen Kommunikationseinheiten RNT, MKE übermittelt. In Kapitel 6.2.2.1.1, ETS 300 175-3 sind die verschiedenen Arten der in die Rundsendenachrichten rn1...6 einfügbaren Rundsendeinformationen P_{T}, N_{T}, M_{T}, C_{T}, Q_{T} sowie das Verfahren - "T-MUX algorithm for RFP transmissions" - zur Übermittlung der verschiedenen Arten der Rundsendeinformationen P_{T}, N_{T}, M_{T}, C_{T}, Q_{T} über die DECT-Rahmen- bzw. DECT-Multirahmen-Struktur beschrieben. Für das Ausführungsbeispiel sei eine in FIG 2A bis FIG 2D dargestellte Ausgestaltung des T-Mux Algorithmus zur Rahmen- und Multirahmen-orientierten Übermittlung der Rundsendeinformationen P_{T}, N_{T}, M_{T}, C_{T}, Q_{T} angenommen. Es sei angemerkt, daß im Gegensatz zu aktuellen Rundesende-Verfahren die Rundsendeinformationen P_{T}, N_{T}, M_{T}, C_{T}, Q_{T} mehrmals innerhalb eines DECT-Multirahmens, d.h. in mehreren DECT-Rahmen innerhalb eines DECT-Multirahmens ausgesendet werden. FIG 2A bis FIG 2B zeigen selbsterläuternd in einem Ausführungsbeispiel eine sich periodisch wiederholende Folge von ausgesendeten DECT-Multirahmen n+0...n+15 - in FIG 2A..2D auch als Multiframe bezeichnet -, wobei für jeden DECT-Multirahmen bzw. für jeden einem DECT-Multirahmen zugeordneten DECT-Rahmen - in FIG 2A..2D auch als Frame bezeichnet - die Art der übermittelten Rundsendeinformationen P_{T}, N_{T}, M_{T}, C_{T}, Q_{T} in Abhängigkeit der jeweiligen Priorität - hier Prio1,2,3 - dargestellt ist. Beispielsweise werden die den Paging-Informationen P_{T} zuzuordnenden "Blind Slot Information" im Multirahmen n+0 sechsmal - im Rahmen 0,2,4,6,10 und 12 -, im Multirahmen n+2 zweimal - im Rahmen 10 und 12 -, im Multirahmen n+4 sechsmal - im Rahmen 0,2,4,6,10 und 12 - und im Multirahmen n+6 zweimal - im Rahmen 10 und 12 - usw. ausgesendet. Desweiteren werden die den Paging-Informationen P_{T} zuzuordnenden "Blind Double Slot Information" z.B. im Multirahmen n+1 fünfmal - im Rahmen 2,4,6,10 und 12 -, im Multirahmen n+2 dreimal - im Rahmen 2,4 und 6 -, im Multirahmen n+5 fünfmal - im Rahmen 2,4,6,10 und 12 - und im Multirahmen n+6 dreimal - im Rahmen 2,4 und 6 - usw. ausgesendet.

Wie bereits erläutert, werden in die von den Basisstationen RBS1...6 ausgesendeten Rundsendenachrichten rn1...6 unter anderem jeweils eine die Übertragungskanalparameter des basisstationspezifischen Rundsendekanals repräsentierende Rundsendekanal-Informationen bbpo1...6 eingefügt. Die Rundsendekanal-Informationen bbpo1...6 werden auch als "Bearer description" bzw. "Broadcast Bearer Position"-Informationen bezeichnet und sind in Kapitel 7.2.4.3.4, ETS 300 175-3 beschrieben. Mit Hilfe der ausgesendeten Rundsendekanal-Informationen bbpo1...6 werden den im Funkbereich einer Basisstation RBS1...6 angeordneten, dezentralen Kommunikationseinheiten RNT, MKE Informationen dahingehend übermittelt, auf welchem Rundsendekanal - d.h. auf welcher DECT-Frequenz und in welchem DECT-Zeitschlitz - die Rundsendenachrichten rn1...6 der jeweiligen Basisstation RBS1...6 in den nachfolgenden DECT-Multirahmen ausgesendet werden.

Nach FIG 2A..2D werden in jedem vierten DECT-Multirahmen bzw. DECT-Multiframe - hier im DECT-Multirahmen n+3, n+7, n+11 und n+15 - die für die jeweils folgenden DECT-Multirahmen aktuellen Übertragungskanalparameter bzw. aktuellen DECT-Frequenz-/Zeitschlitz-Kombinationen - im folgenden als "Broadcast Bearer Position" bezeichnet - in die Rundsendenachrichten rn1...6 eingefügt und an die dezentralen Kommunikationseinheiten RNT, MKE übermittelt. Durch die ausgesendeten "Broadcast Bearer Position"-Informationen bbpo1...6 werden den im Funkbereich der Basisstationen RBS1...6 angeordneten dezentralen Kommunikationseinheiten RNT, MKE Informationen dahingehend übermittelt, welcher der einer Basisstation RBS1...6 zugeordneten Rundsendekanäle - "traffic" oder "dummy" - nachfolgend für den Empfang von Rundsendenachrichten rn1...6 zu nutzen ist.

Im Folgenden wird das erfindungsgemäße Verfahren zum gezielten Empfangen und Bewerten der von mehreren Basisstationen RBS1...6 ausgesendeten Rundsendenachrichten rn1...6 näher erläutert.

Es wird eine Rahmen- und Multirahmensynchronität der sechs im drahtlosen Teilnehmerzugangsnetz ACCESS angeordneten Basisstationen RBS1...6 vorausgesetzt, was in öffentlichen, gemäß dem DECT Generic Access Profile - GAP: ETS 300 444 - ausgestalteten Systemen mit Unterstützung der Verschlüsselung von zu übermittelnden Informationen gewährleistet ist. Durch die in FIG 1 dargestellte Netzabschlußeinheit RNT bzw. durch das mobile Kommunikationsendgerät MKE werden auf der DECT-Luftschnittstelle DECT-Signale gesucht, bei Vorfinden von DECT-Signalen die von den Basisstationen RBS1...6 ausgesendeten Rundsendenachrichten rn1...6 erfaßt und anschließend mit Hilfe der in die Rundsendenachrichten rn1...6 eingefügten Synchronisierungsinformationen eine Bit- , Zeitschlitz- , Rahmen- und Multirahmen-Synchronität zu einer der sechs Basisstationen RBS1...6 eingerichtet. Nach Einrichtung der Rahmen- und Mulitrahmnen-Synchronität werden durch Erfassung und Auswertung von in die Rundsendenachrichten rn1...6 eingefügten "Identities Information"-Informationen rfpi1...6 die Identitäten und Anschlußrechte der an der dezentralen Kommunikationseinheit RNT, MKE empfangbaren Basisstationen RBS1...6 erfaßt, bewertet und gespeichert. Die "Identities Information"-Informationen - auch als "Primary Access Rights Identifier" (PARI) bezeichnet - rfpi1...6 stellen eine weitere Art der in die Rundsendenachrichten rn1...6 einfügbaren Rundsendeinformationen P_{T}, N_{T}, M_{T}, C_{T}, Q_{T} dar und sind in Kapitel 7.2.2, ETS 300 175-3 beschrieben. Zur Erfassung der den N_{T}-Rundsendeinformationen zugeordneten "Identities Information"-Informationen werden für die Dauer von zwei aufeinanderfolgenden DECT-Multirahmen die in den dezentralen Kommunikationseinheiten RNT, MKE angeordneten Empfänger in den DECT-Rahmen 1,3,5,7,9,11,13,14 und 15 auf je einer der 10 DECT-Frequenzen f1...10 über alle Zeitschlitze aktiviert und die von den Basisstationen RBS1...6 ausgesendeten N_{T}-Rundsendeinformationen - vg1. table 4, Kapitel 6.2.2.1.1, ETS 300 175-3 - erfaßt und ausgewertet. Mit Hilfe der ausgewerteten Identitäten und Anschlußrechte rfpi1...6 wird in den dezentralen Kommunikationseinheit RNT, MKE jeweils eine Liste von empfangbaren Basisstationen RRBS1...6 mit gültigen Anschlußrechten erzeugt und gespeichert. Vorteilhaft ist die Liste der jeweils gültige Anschlußrechte aufweisenden Basisstationen RBS1...6 nach Empfangsfeldstärken sortiert. Werden durch eine dezentrale Kommunikationseinheit RNT, MKE beispielsweise m Basisstationen RRBS1...6 mit gültigen Anschlußrechten rfpi1...6 ermittelt, wird in der jeweiligen dezentralen Kommunikationseinheit RNT, MKE eine Tabelle tab zum Abspeichern der von den m Basisstationen RRBS1...6 ausgesendeten Rundsendenachrichten rn1...6 bzw. der darin eingefügten Rundsendeinformationen P_{T}, N_{T}, M_{T}, C_{T}, Q_{T} erzeugt, wobei m <= 6. In FIG 1 ist beispielhaft eine in der dezentralen Netzabschlußeinheit RNT erzeugte Tabelle tab dargestellt, wobei die m empfangbaren Basisstationen RBS1...6 mit gültigen Anschlußrechten in entsprechenden Tabelleneinträgen te1...m der Tabelle tab speicherbar sind.

Um den dezentralen Kommunikationseinheiten RNT, MKE die erfindungsgemäße effektive Nutzung der durch das drahtlose Teilnehmerzugangsnetz ACCESS bereitgestellten Übertragungsressourcen zu ermöglichen, müssen die Rundsendenachrichten rn1...6, bzw. die darin eingefügten Rundsendeinformationen P_{T}, N_{T}, M_{T}, C_{T}, Q_{T} der in der Tabelle tab gespeicherten m Basisstationen RRBS1...6 sowohl vor als auch nach einer erfolgten Anmeldung an einer der m Basisstationen RBS1...6 erfaßt, ausgewertet und gespeichert werden. Für ein gezieltes Empfangen der von den m gespeicherten Basisstationen RBS1...6 ausgesendeten Rundsendenachrichten rn1...6 müssen die jeweils aktuell gültigen Rundsendekanal- bzw. "Broadcast Bearer Position"-Informationen bbpo1...6 der m Basisstationen RBS1...6 durch die dezentralen Kommunikationseinheiten RNT, MKE ermittelt und gespeichert werden. Für die folgende Beschreibung sei angenommen, daß durch die in FIG 1 dargestellten, dezentralen Kommunikationseinheiten RNT, MKE die von den sechs dargestellten Basisstationen RBS1...6 ausgesendeten Rundsendenachrichten rn1...6 empfangen werden - m = 6 -, wobei alle sechs Basisstationen RBS1...6 gültige Anschlußrechte aufweisen.

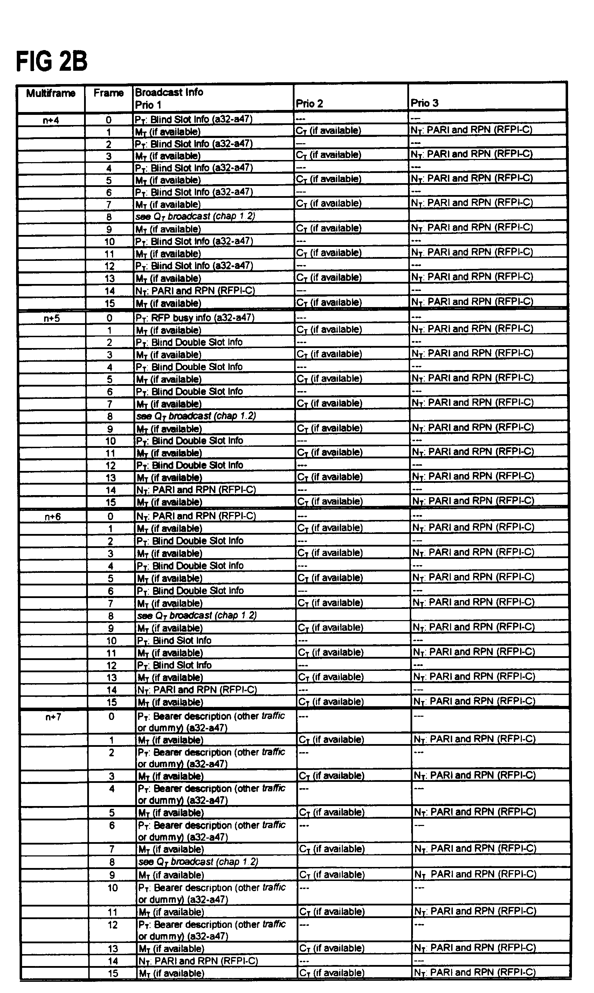

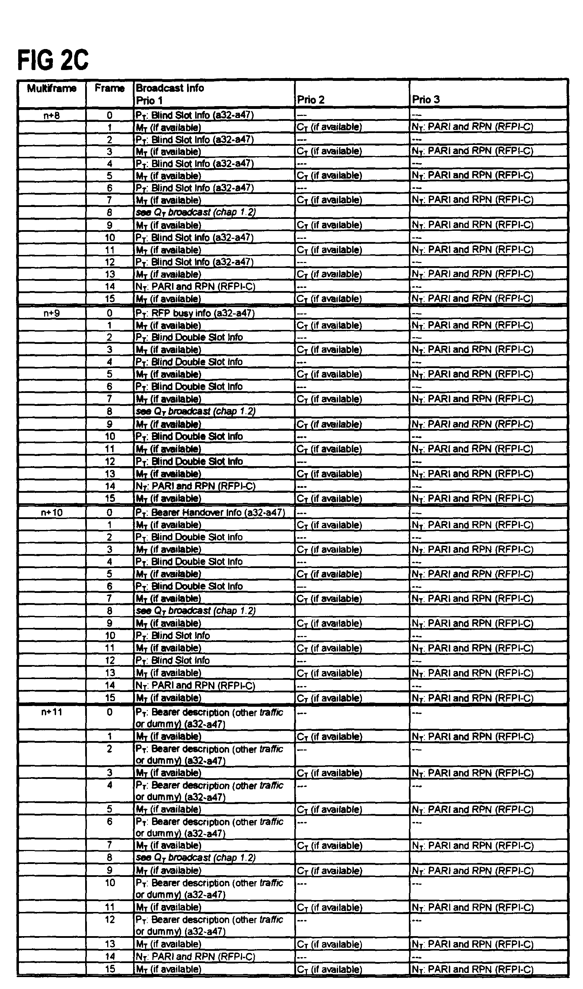

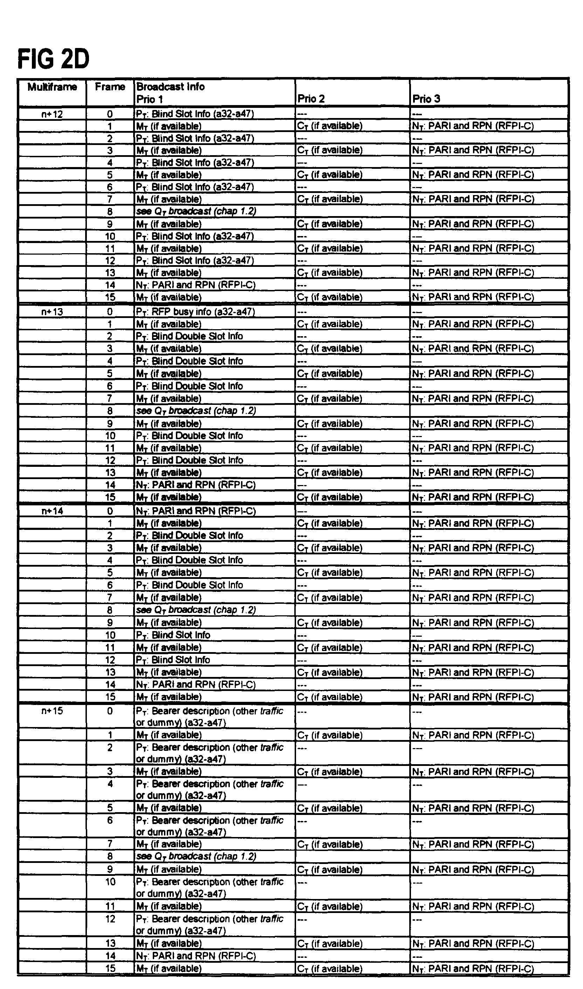

Gemäß dem in FIG 2 dargestellten T-Mux-Algorithmus werden die den "Bearer Description"-Informationen zugeordneten Rundsendekanal- bzw. "Broadcast Bearer Position"-Informationen bbpo1...6 in den DECT-Multirahmen n+3, n+7, n+11 und n+15 von den sechs Basisstationen RBS1...6 ausgesendet. Erfindungsgemäß werden in diesen DECT-Multirahmen - für das weitere Ausführungsbeispiel sei beispielhaft der DECT-Multirahmen n+3 angenommen - die in den dezentralen Kommunikationseinheiten RNT, MKE angeordneten Empfänger im Rahmen 0,2,4,6,10 und 12 des DECT-Multirahmens - hier n+3 - auf je einer der 10 DECT-Frequenzen f1...10 über alle Zeitschlitze aktiviert, so daß auf sechs von den 10 DECT-Frequenzen f1...10 alle über diese sechs DECT-Frequenzen ausgesendeten neuen, d.h. für die nachfolgenden DECT-Multirahmen aktuellen "Broadcast Bearer Position" - Informationen bbpo1...6 erfaßt bzw. "gescannt" werden. Die erfaßten neuen "Broadcast Bearer Position"-Informationen bbpo1...6 werden den sechs in der Tabelle tab gespeicherten Basisstationen RRBS1...6 zugeordnet und in den entsprechenden Tabelleneinträgen te1...6 gespeichert. Es gilt als wahrscheinlich, daß bei dem Erfassen bzw. Scannen der "Broadcast Bearer Position"-Informationen auf 6 der 10 DECT-Frequenzen f1...10 noch nicht alle "Broadcast Bearer Position"-Informationen bbpo1...6 der in der Tabelle tab gespeicherten sechs Basisstationen RRBS1...6 empfangen werden. Beispielsweise sei angenommen, daß beim ersten durch die dezentrale Kommunikationseinheit RNT, MKE durchgeführten Scannvorgang die "Broadcast Bearer Position"-Informationen bbpo1...4 von vier der sechs Basisstationen RRBS1...6 erfaßt und in den entsprechenden Tabelleneinträgen te1...4 der Tabelle tab gespeichert werden.

Mit Hilfe der vier gespeicherten, aktuellen "Broadcast Bearer Position"-Informationen bbpo1...4 werden durch die dezentralen Kommunikationseinheiten RNT, MKE in den folgenden drei Multirahmen - hier n+4 bis n+6 - die über die vier gespeicherten DECT-Frequenz-/Zeitschlitz-Kombinationen bbpo1...4 übermittelten Rundsendenachrichten rn1...4 gezielt empfangen und die in Rundsendenachrichten rn1...4 eingefügten Rundsendeinformationen P_{T}, N_{T}, M_{T}, C_{T}, Q_{T} ausgewertet und in den entsprechenden Tabelleneinträgen te1...4 der Tabelle tab gespeichert. Dazu werden in den DECT-Multirahmen - hier n+4 bis n+6 - jeweils im DECT-Rahmen 0 auf der im ersten Tabelleneintrag tel gespeicherten ersten "Broadcast Bearer Position" bbpo1 die Rundsendenachrichten rn1 der ersten Basisstation RBS1, im DECT-Rahmen 2 auf der im zweiten Tabelleneintrag te2 gespeicherten zweiten "Broadcast Bearer Position" bbpo2 die Rundsendenachrichten rn2 der zweiten Basisstation RBS2, im DECT-Rahmen 4 auf der im dritten Tabelleneintrag te3 gespeicherten dritten "Broadcast Bearer Position" bbpo3 die Rundsendenachrichten rn3 der dritten Basisstation RBS3 und im DECT-Rahmen 6 auf der im vierten Tabelleneintrag te4 gespeicherten vierten "Broadcast Bearer Position" bbpo4 die Rundsendenachrichten rn4 der vierten Basisstation RBS4 empfangen.

Anschließend werden im darauffolgenden DECT-Multirahmen - hier n+7 -, in welchem die neuen bzw. aktualisierten Rundsendekanal-Informationen bzw. "Broadcast Bearer Position"-Infomationen bbpo1...6 der sechs Basisstationen RRBS1...6 übermittelt werden, die in den dezentralen Kommunikationseinheiten RNT, MKE angeordneten Empfänger im DECT-Rahmen 0,2,4 und 6 des DECT-Multirahmens - hier n+7 - auf je einer der bereits bekannten, aus den vier bereits gespeicherten "Broadcast Bearer Position"-Infomationen bbpo1...4 ableitbaren DECT-Frequenzen f1...4 über alle Zeitschlitze aktiviert. Bei diesem Scannvorgang werden sowohl die vier aktualisierten "Broadcast Bearer Position"-Informationen bbpo1...4 der vier bereits "gescannten" Basisstationen RBS1...4 ermittelt und gespeichert als auch gegebenenfalls weitere "Broadcast Bearer Position"-Informationen bbpo5,6 der noch fehlenden, d.h. noch nicht "gescannten" fünften und sechsten Basisstation RBS5,6 ermittelt. Die "Broadcast Bearer Position"-Informationen bbpo5, 6 der noch fehlenden Basisstationen RBS5,6 können bei diesem Scannvorgang jedoch nur dann erfaßt werden, falls diese ebenfalls über die vier bereits gespeicherten DECT-Frequenzen f1...4 ausgesendet werden. Für den Fall daß die Rundsendenachrichten rn5,6 der fehlenden Basisstationen RBS5,6 nicht über die vier gespeicherten DECT-Frequenzen f1...4 ausgesendet werden, können die fehlenden "Broadcast Bearer Position"-Informationen bbpo5,6 in den verbleibenden Rahmen 10 und 12 des DECT-Multirahmens n+7 auf weiteren, zufällig bestimmten DECT-Frequenzen - hier z.B. f5 und f6 - empfangen werden. Erfindungsgemäß werden die beschriebenen Schritte bzw. das Erfassen der ausgesendeten "Broadcast Bearer Position"-Informationen bbpo1...6 so lange wiederholt, bis alle aktualisierten "Broadcast Bearer Position"-Informationen bbpo1...6 der sechs in der Tabelle tab der dezentralen Kommunikationseinheiten RNT, MKE gespeicherten Basisstationen RRBS1...6 erfaßt und in den entsprechenden Tabelleneinträgen te1...6 gespeichert sind. Anschließend wird durch die dezentrale Kommunikationseinheit RNT, MKE eine DECT-Rahmen- und DECT-Multirahmen-Synchronität zu der am besten empfangenen Basisstation RBS1...6 eingerichtet - dies wird auch als "einlocken" an der am besten empfangenen Basisstation RBS1...6 bezeichnet. Für dieses Ausführungsbeispiel sei angenommen, daß in der dezentralen Kommunikationseinheit RNT, MKE die erste Basisstation RBS1 die höchste Empfangsfeldstärke aufweist.

Nach erfolgtem "Einlocken" der dezentralen Kommunikationseinheit RNT, MKE an der ersten Basisstation RBS1 werden durch die dezentrale Kommunikationseinheit RNT, MKE in den nachfolgenden DECT-Multirahmen - n > 7 - jeweils im ersten DECT-Rahmen - Frame 0 - die weiteren auf der ersten Broadcast Bearer Position bbpo1 der eigenen d.h. angemeldeten Basisstation - hier RBS1 - übermittelten Rundsendenachrichten rn1 bzw. die darin eingefügten Rundsendeinformationen P_{T}, N_{T}, M_{T}, C_{T}, Q_{T} -beispielsweise "Blind Slot Information"-Information oder "Blind Double Slot Information"-Information - empfangen und im entsprechenden Tabelleneintrag tel der Tabelle tab gespeichert. Entsprechend werden im dritten DECT-Rahmen - Frame 2 - die weiteren auf der zweiten "Broadcast Bearer Position" bbpo2 übermittelten Rundsendeinformationen P_{T}, N_{T}, M_{T}, C_{T}, Q_{T} der am zweitbesten empfangenen Basisstation RBS2, im fünften DECT-Rahmen - Frame 4 - die weiteren auf der dritten "Broadcast Bearer Position" bbpo3 übermittelten Rundsendeinformationen P_{T}, N_{T}, M_{T}, C_{T}, Q_{T} der am drittbesten empfangenen Basisstation RBS3, im siebten DECT-Rahmen - Frame 6 - die weiteren auf der vierten "Broadcast Bearer Position" bbpo4 übermittelten Rundsendeinformationen P_{T}, N_{T}, M_{T}, C_{T}, Q_{T} der am viertbesten empfangenen Basisstation RBS4, im elften DECT-Rahmen - Frame 10 - die weiteren auf der fünften "Broadcast Bearer Position" bbpo5 übermittelten Rundsendeinformationen P_{T}, N_{T}, M_{T}, C_{T}, Q_{T} der am fünftbesten empfangenen Basisstation RBS5 und im dreizehnten DECT-Rahmen - Frame 12 - die weiteren auf der sechsten "Broadcast Bearer Position" bbpo6 übermittelten Rundsendeinformationen P_{T}, N_{T}, M_{T}, C_{T}, Q_{T} der am sechstbesten empfangenen Basisstation RBS6 ermittelt und gespeichert. Auf diese Weise werden durch eine an einer Basisstation angemeldete dezentrale Kommunikationseinheit RNT, MKE sukzessive die vollständigen Rundsendenachrichten rn1...6 bzw. die darin eingefügten Rundsendeinformationen P_{T}, N_{T}, M_{T}, C_{T}, Q_{T} von bis zu sechs Basisstationen RB1...6 empfangen, wodurch die in den entsprechenden Tabelleneinträgen te1...6 der Tabelle tab gespeicherten Rundsendeinformationen P_{T}, N_{T}, M_{T}, C_{T}, Q_{T} laufend aktualisiert werden.

Bei Störungen auf dem Übertragungsmedium DECT-Funkkanal kann der Fall eintreten, daß zu dem Zeitpunkt, in welchem in den DECT-Multirahmen - n+3, n+7, n+11, n+15... - die neuen "Broadcast Bearer Position"-Informationen bbpo1...6 von den Basisstationen RBS1...6 ausgesendet werden, die auf einer aktuellen "Broadcast Bearer Position" ausgesendeten neuen "Broadcast Bearer Position"-Informationen bbpo1...6 einer oder mehrere Basisstationen RBS1...6 durch eine dezentrale Kommunikationseinheit RNT, MKE nicht detektiert werden können. Um eine weitere Aktualisierung der in der dezentralen Kommunikationseinheit RNT, MKE gespeicherten Rundsendeinformationen P_{T}, N_{T}, M_{T}, C_{T}, Q_{T} dieser Basisstation RBS1...6 trotzdem zu gewährleisten, werden gemäß einer vorteilhaften Ausgestaltung des erfindungsgemäßen Verfahrens jeweils beide von einer Basisstation RBS1...6 für die Übermittlung von Rundsendenachrichten rn1...6 alternierend genutzten Rundsendekanäle bzw. "Broadcast Bearer Position" bbpo1...6 - aktive Verbindung (traffic) oder Dummy-Bearer - in den jeweiligen Tabelleneinträgen te1...6 der Tabelle tab gespeichert. Bei einer Störung eines Rundsendekanals bbpo1...n und einer dadurch verursachten fehlerhaften Ermittlung der aktualisierten, für die nachfolgenden DECT-Multirahmen für die entsprechende Basisstation RBS1...6 gültigen "Broadcast Bearer Position"-Information bbpo1...6 können die von der Basisstation RRBS1...6 übermittelten Rundsendenachrichten rn1...6 über den gespeicherten zweiten Rundsendekanal der Basisstation RBS1...6, also auf der zuletzt für die jeweilige Basisstation RBS1...6 gültigen "Broadcast Bearer Position" bbpo1...6 empfangen werden.

Desweiteren kann der Fall eintreten, daß zwischen einer Basisstation - hier RBS1 - und einer daran angemeldeten dezentralen Kommunikationseinheit RNT, MKE eine aktive Verbindung eingerichtet ist, d.h. Informationen bzw. Sprach- oder Nutzdaten über eine bestimmte DECT-Frequenz-/Zeitschlitzkombination von der oder an die dezentrale Kommunikationseinheit RNT, MKE gesendet werden. In diesem Fall können durch die angemeldete, dezentrale Kommunikationseinheit RNT, MKE die Rundsendenachrichten rn1...6 derjenigen Basisstationen RBS1...6 nicht empfangen bzw. erfaßt und ausgewertet werden, deren Rundsendenachrichten auf dem gleichen Zeitschlitz ausgesendet werden. Durch das vorteilhafte Abspeichern aller von einer Basisstation RBS1...6 alternierend genutzten Rundsendekanäle bzw. "Broadcast Bearer Position"-Informationen bbpo1...6 können für den Fall einer oder mehrere aktiven Verbindungen zwischen der Basisstation RBS1...6 und der dezentralen Kommunikationseinheit die von den betreffenden Basisstation RBS1...6 übermittelten Rundsendenachrichten rn1...6 auf der zweiten bzw. alterierend genutzten "Broadcast Bearer Position" bbpo1...6 empfangen und die gespeicherten Rundsendeinformationen P_{T}, N_{T}, M_{T}, C_{T}, Q_{T} aktualisiert werden.

Bei vielen gleichzeitig geführten Verbindungen durch eine dezentrale Kommunikationseinheit RNT, MKE und/oder bei Störungen auf den DECT-Funkkanälen, kann der Fall eintreten, daß trotz des Abspeicherns der jeweils von einer Basisstation RBS1...6 alternierend genutzten Rundsendekanäle bzw. "Broadcast Bearer Position" bbpo1...6, die Rundsendenachrichten rn1...6 einer oder mehrerer Basisstationen RBS1...6 nicht weiter durch die dezentrale Kommunikationseinheit DKE, MKE empfangen und die gespeicherten Rundsendeinformationen P_{T}, N_{T}, M_{T}, C_{T}, Q_{T} der jeweiligen Basisstationen RBS1...6 nicht weiter aktualisiert werden können. Derartige auf diese Weise veraltete Rundsendeinformationen P_{T}, N_{T}, M_{T}, C_{T}, Q_{T} - welche somit nicht mehr den aktuellen Zustand der betreffenden Basisstation RBS1...6 repräsentieren - können für aktuelle prozedurale oder vermittlungstechnische Vorgänge - z.B. Verbindungsaufbau oder Handover - nicht mehr genutzt werden. Gemäß einer weiteren vorteilhaften Ausgestaltung des erfindungsgemäßen Verfahrens können in den dezentralen Kommunikationseinheiten RNT, MKE kommunikationseinheit-spezifische Schwellwerte definiert werden, welche die minimale Anzahl bzw. den minimalen prozentualen Anteil derjenigen Basisstationen RBS1...6 repräsentieren, deren ausgesendeten Rundsendenachrichten rn1...6 durch die dezentralen Kommunikationseinheit RNT,MKE empfangen und aktualisiert werden können. Wird dieser definierte Schwellwert unterschritten - werden beispielsweise bei weniger als 60% der in der Tabelle tab gespeicherten Basisstationen RBS1...6 die ausgesendeten Rundsendenachrichten rn1...6 empfangen, bzw. die gespeicherten Rundsendeinformationen P_{T}, N_{T}, M_{T}, C_{T}, Q_{T} aktualisiert -, wird das erfindungsgemäße Verfahren neu initialisiert, bzw. wird das beschriebene Erfassen der "Broadcast Bearer Position"-Informationen bbpo1...6 erneut durchgeführt.

Vorteilhaft können auch bei einer geringeren Anzahl - d.h. m < 6 - von im drahtlosen Teilnehmerzugangsnetz ACCESS angeordneten, jeweils gültige Anschlußrechte aufweisenden Basisstationen RBS1...m die von diesen ausgesendeten Rundsendenachrichten durch die dezentralen Kommunikationseinheiten RNT, MKE empfangen und ausgewertet werden. Dabei kann die Erfassung der ausgesendeten Rundsendenachrichten rn1...m bzw. der darin eingefügten "Broadband Bearer Position"-Informationen bbpo1...m in Abhängigkeit von der Anzahl m der in der dezentralen Kommunikationseinheit RNT, MKE gespeicherten Basisstationen RBS1...m erfolgen. Sind beispielsweise drei Basisstationen RBS1...3 mit den entsprechenden "Broadcast Bearer Position"-Informationen bbpo1...3 in der Tabelle tab gespeichert, werden gemäß einer vorteilhaften Ausgestaltungsvariante des erfindungsgemäßen Verfahrens in den nachfolgenden DECT-Multirahmen jeweils im ersten und dritten DECT-Rahmen - Frame 0 und Frame 2 - die über die erste "Broadcast Bearer Position" bbpo1 übermittelten Rundsendenachrichten rn1 der ersten Basisstation RBS1, im fünften und siebten DECT-Rahmen - Frame 4 und Frame 6 - die über die zweite "Broadcast Bearer Position" bbpo2 übermittelten Rundsendenachrichten rn2 der zweiten Basisstation RBS2 und im elften und dreizehnten DECT-Rahmen - Frame 10 und Frame 12 - die über die dritte "Broadcast Bearer Position" bbpo3 übermittelten Rundsendenachrichten rn3 der dritten Basisstation RBS2 empfangen, wobei durch das wiederholte Empfangen jeweils einer Rundsendenachricht rn1...3 über verschiedene Rundsendekanäle bzw. "Broadcast Bearer Position" die Fehlerwahrscheinlichkeit der empfangenen Rundsendeinformationen P_{T}, N_{T}, M_{T}, C_{T}, Q_{T} minimiert wird.

Durch das erfindungsgemäße Verfahren werden von einer im Funkbereich von mehreren Basisstationen RRBS1...6 angeordneten, dezentralen Kommunikationseinheit RNT, MKE nicht nur die Rundsendenachricht rn1...6 derjenigen Basisstation RRBS1...6 empfangen, an welcher die dezentrale Kommunikationseinheit RNT, MKE angemeldet ist, sondern auch die Rundsendenachrichten RN1...6 von bis zu fünf weiteren benachbarten Basisstationen RRBS1...6 erfaßt und bewertet. Vorteilhaft wird eine bessere Einschätzung der durch die benachbarten Basisstationen RBS1...6 bereitgestellten Üertragungskapazität bzw. der Übertragungsressourcen ermöglicht. Durch das erfindungsgemäße Empfangen, Auswerten und Abspeichern von von mehreren Basisstationen RRBS1...6 ausgesendeten Rundsendenachrichten rn1...6 wird bei einer durch die dezentrale Kommunikationseinheit RNT, MKE initiierten Verbindungsanforderung ein schnellerem Verbindungsaufbau zu einer Basisstation RRBS1...6 sowie ein schnellerer und sichererer Handover beim Wechsel beispielsweise des mobilen Kommunikationsendgerätes MKE vom Funkbereich einer ersten Basisstation RRBS1...6 in den Funkbereich einer zweiten Basisstation RRBS1...6 gewährleistet.

## Patentansprüche

1. Verfahren zum Empfangen von Rundsendenachrichten (rn1...6) mehrerer zentraler Kommunikationseinheiten (RBS1...6) durch zumindest eine dezentrale Kommunikationseinheit (RNT, MKE), wobei die Rundsendenachrichten (rn1...6) von den zentralen Kommunikationseinheiten (RBS1...6) jeweils über zumindest einen zuordenbaren kommunikationseinrichtungs-spezifischen Rundsendekanal ausgesendet werden,
- bei dem in die über die Rundsendekanäle gesendeten Rundsendenachrichten (rn1...6) jeweils eine die aktuelle Frequenz und/oder den aktuellen Zeitschlitz und/oder den aktuellen Spreizcode des kommunikationseinheit-spezifischen Rundsendekanals angebende Rundsendekanal-Information (bbpo1...6) eingefügt ist,
- bei dem durch die zumindest eine dezentrale Kommunikationseinheit (RNT, MKE)
-- die aktuellen Rundsendekanal-Informationen (bbpo1...6) von zumindest zwei der zentralen Kommunikationseinheiten (RBS1...6) erfaßt und bewertet werden, und
-- in Abhängigkeit vom Bewertungsergebnis die von den zentralen Kommunikationseinheiten (RBS1...6) ausgesendeten Rundsendenachrichten (rn1...6) empfangen, bewertet und optional gespeichert werden.

2. Verfahren nach Anspruch 1,
**dadurch gekennzeichnet**,
- daß in die über die kommunikationseinheit-spezifischen Rundsendekanäle gesendeten Rundsendenachrichten (rn1...6) jeweils eine die Identität und die Zugangsrechte der jeweiligen zentralen Kommunikationseinheit (RBS1...6) angebende Berechtigungs-Information (rfpi1...6) eingefügt ist,
- daß durch die zumindest eine dezentrale Kommunikationseinheit die Berechtigungs-Informationen (rfpi1...6) der zentralen Kommunikationseinheiten (RBS1...6) erfaßt, bewertet und optional gespeichert werden, und
- daß nur die Rundsendekanal-Informationen (bbpo1...6) derjenigen zentralen Kommunikationseinheiten (RBS1...6) mit gültigen Zugangsrechten empfangen und bewertet werden.

3. Verfahren nach Anspruch 1 oder 2,
**dadurch gekennzeichnet** ,
- daß in Abhängigkeit der bewerteten Rundsendenachrichten (rn1...6) nach zumindest einem vorgegebenen Kriterium eine Anmeldung der zumindest einen dezentralen Kommunikationseinheit (RNT, MKE) an einer der zentralen Kommunikationseinheiten (RBS1...6) erfolgt, wobei die von dieser zentralen Kommunikationseinheit (RBS1...6) ausgesendeten Rundsendenachrichten (rn1...6) durch die angemeldete, dezentrale Kommunikationseinheit (RNT, MKE) empfangen werden, und
- daß durch die angemeldete dezentrale Kommunikationseinheit (RNT, MKE) die von zumindest einer weiteren der zentralen Kommunikationseinheiten (RBS1...6) ausgesendeten Rundsendenachrichten (rn1...6) in Abhängigkeit von der bewerteten Rundsendekanal-Informationen (bbpo1...6) empfangen, bewertet und optional gespeichert werden.

4. Verfahren nach einem der vorherigen Ansprüche,
**dadurch gekennzeichnet**,
daß die zentralen und dezentralen Kommunikationseinheiten (RBS1...6, RNT, MKE) gemäß dem internationalen DECT-Standard ETS 300 175 ausgestaltet sind.

5. Verfahren nach Anspruch 4,
**dadurch gekennzeichnet**,
- daß die zentralen Kommunikationseinheiten (RBS1...6) eine DECT-Rahmen- und DECT-Multirahmen-Synchronität aufweisen,
- daß von den zentralen Kommunikationseinheiten (RBS1...6) die Rundsendenachrichten (rm1...6) multirahmen-spezifisch mit Hilfe eines Multiplexverfahrens gemäß dem Standard ETS 300 175-3 ausgesendet werden, und
- daß die multirahmen-spezifischen Rundsendenachrichten (rn1...6) in mehreren DECT-Rahmen (Frame0...15) innerhalb eines DECT-Multirahmens (Multiframe n+0,...) gesendet werden, wobei innerhalb eines periodisch wiederkehrenden DECT-Multirahmens (Multiframe n+3, n+7, n+11, n+15,...) die aktuellen kommunikationseinheit-spezifischen Rundsendekanal-Informationen (bbpo1...6) gesendet werden.

6. Verfahren nach Anspruch 4 oder 5,
**dadurch gekennzeichnet**,
daß der Empfang der von den zentralen Kommunikationseinheiten (RBS1...6) ausgesendeten Rundsendenachrichten (rn1...6) derart erfolgt,
a) daß durch die dezentrale Kommunikationseinheit (RNT, MKE) eine Rahmen- und Multirahmen-Synchronität zu einer der zentralen Kommunikationseinheiten (RNT, MKE) eingerichtet wird,
b) daß bei Empfang des Multirahmens (Multiframe), in welchem die kommunikationseinrichtung-spezifischen Berechtigungs-Informationen (rfpi1...6) gesendet werden, die Identitäten derjenigen zentralen Kommunikationseinheiten (RNS1...6) mit gültigen Zugangsrechten ermittelt und gespeichert werden,
c) daß bei Empfang des Multirahmens (Multiframe n+3, n+7, n+11, n+15,...), in welchem die kommunikationseinheit-spezifischen Rundsendekanal-Informationen (bbpo1...6) gesendet werden, nur die aktuellen Rundsendekanal-Informationen (bbpo1...6) derjenigen zentralen Kommunikationseinheiten (RBS1...6) mit ermittelten, gültigen Zugangsrechten erfaßt und bewertet werden, wobei mit Hilfe der bewerteten Rundsendekanal-Informationen (bbpo1...6) der aktuelle jeweils einer Basisstation (RBS1...6) zugeordnete Rundsendekanal bestimmt wird,
d) daß bei Empfang der nachfolgenden Multirahmen (Multiframe) die über die bestimmten Rundsendekanäle übermittelten, kommunikationseinrichtung-spezifischen Rundsendenachrichten (rn1...6) empfangen und bewertet und optional gespeichert werden.

7. Verfahren nach Anspruch 6,
**dadurch gekennzeichnet**,
daß die Schritte c) und d) solange wiederholt werden, bis die aktuellen Rundsendekanal-Informationen (bbpo1...6) aller zentralen Kommunikationseinheiten (RBS1...6) mit gültigen Anschlußrechten erfaßt und bewertet sind.

8. Verfahren nach Anspruch 6 oder 7,
**dadurch gekennzeichnet**,
e) - daß in Abhängigkeit der bewerteten Rundsendenachrichten (rn1...6) eine DECT-Rahmen- und DECT-Multirahmen-Synchronität zu derjenigen zentralen Kommunikationseinheit (RBS1...6) mit den besten Empfangseigenschaften eingerichtet wird, und
f) - daß nach erfolgter Einrichtung der DECT-Rahmen- und DECT-Multirahmen-Synchronität die Schritte c) und d) periodisch wiederholt werden.

9. Verfahren nach einem der Ansprüche 4 bis 8,
**dadurch gekennzeichnet**,
daß die kommunikationseinheit-spezifischen Rundsende-Kanalinformationen (bbpo1...6) in jedem vierten Multirahmen (Multiframe n+3, n+7, n+11, n+15,...) gesendet werden.

10. Verfahren nach einem der vorherigen Ansprüche,
**dadurch gekennzeichnet**,
daß für die Übermittlung der Rundsendekanal-Informationen (bbpo1...6) eine "Bearer Description"-Rundsendenachricht gemäß ETS 300 175-3, Kap. 7.2.4.3.4., und
daß für die Übermittlung der Berechtigungs-Informationen (rfpi1...6) eine "Identities Information"-Rundsendenachricht gemäß ETS 300 175-3, Kap. 7.2.2 vorgesehen ist.

11. Verfahren nach einem der Ansprüche 5 bis 10,
**dadurch gekennzeichnet**,
daß die multirahmen-spezifische Übermittlung der Rundsendenachrichten (rn1...6) gemäß FIG 2A bis FIG 2D realisiert ist.
